## Europäisches Patentamt

## European Patent Office

## Office européen des brevets

(11) Numéro de publication: **0 190 529**
**B1**

## (12) FASCICULE DE BREVET EUROPEEN

(45) Date de publication du fascicule du brevet:
**09.03.88**

(21) Numéro de dépôt: **85402657.2**

(22) Date de dépôt: **31.12.85**

(51) Int. Cl.⁴: **E 21 B 7/06,** E 21 B 21/10,
F 16 K 17/30, E 21 B 34/10,
E 21 B 43/112, E 21 B 33/127

(54) Dispositif d'actionnement à distance à commande de débit, en particulier pour l'actionnement d'un stabilisateur d'un train de tiges de forage.

(30) Priorité: **07.01.85 FR 8500142**
**02.04.85 FR 8504996**

(43) Date de publication de la demande:
**13.08.86 Bulletin 86/33**

(45) Mention de la délivrance du brevet:
**09.03.88 Bulletin 88/10**

(84) Etats contractants désignés:
**AT CH DE GB IT LI NL**

(56) Documents cités:
**EP - A - 0 056 506**
**GB - A - 1 108 723**
**GB - A - 2 121 455**
**US - A - 3 799 269**
**US - A - 4 471 843**

(73) Titulaire: **S M F International, 7 rue des Fréres Lumiéres,**
**F-58200 Cosne-sur-Loire (FR)**

(72) Inventeur: **Cendre, André, 50 Rue Victor Hugo,**
**F-58200 Cosnes-Sur-Loire (FR)**
Inventeur: **Boulet, Jean, 3 Rue Alexis Carrel,**
**F-75015 Paris (FR)**

(74) Mandataire: **Bressand, Georges et al, c/o CABINET**
**LAVOIX 2 Place d'Estienne d'Orves, F-75441 Paris**
**Cedex 09 (FR)**

ACTORUM AG

## Description

L'invention concerne de manière générale un dispositif d'actionnement à distance d'un équipement associé à un conduit dans lequel circule un fluide incompressible et plus particulièrement un dispositif d'actionnement d'un stabilisateur d'un train de tiges de forage.

Dans le domaine de la recherche et de l'exploitation des hydrocarbures, on utilise des outillages qui doivent développer de fortes puissances pour réaliser des opérations telles que le forage et qui sont situés en fond de trou à une très grande distance de l'endroit situé en surface où sont disposés les moyens de commande et de production de l'énergie nécessaire pour la mise en œuvre des outillages. Ces outillages en fond de trou sont généralement alimentés en fluide incompressible tel qu'une boue de forage par l'intermédiaire d'un conduit de très grande longueur dont une extrémité se trouve en surface et dont l'autre extrémité est en fond de trou et permet l'alimentation de l'outil en boue de forage. L'extrémité du conduit située en surface est reliée à une installation de pompage qui permet d'envoyer dans le conduit de la boue de forage sous pression avec un certain débit pratiquement constant pendant le fonctionnement de l'outillage.

Certains équipements associés au conduit ou à la tige de forage et situés à une très grande distance de la surface doivent être télécommandés, et contrôlés par des dispositifs de télémesure. Il en est ainsi par exemple des dispositifs permettant l'orientation de l'outil de forage et son contrôle de trajectoire, dans le cas de forages inclinés.

Il est également souhaitable de disposer d'un moyen d'actionnement à distance sûr et précis, dans le cas des dispositifs stabilisateurs utilisés dans les installations de forage à trajectoire contrôlée.

Pour corriger la trajectoire du forage en cours d'avancement afin de contrôler parfaitement sa direction, il est connu d'utiliser des dispositifs de stabilisation ou stabilisateurs reliés au train de tiges, généralement dans sa partie voisine de l'outil. De tels dispositifs stabilisateurs comportent un corps relié au train de tiges et une ou plusieurs lames susceptibles de se déplacer dans la direction radiale par rapport à l'axe du train de tiges. Un moyen de commande permet d'assurer l'extraction des lames vers l'extérieur du corps du stabilisateur afin de faire varier la distance d'appui entre l'axe du train de tiges et les bords du trou foré. Grâce à ces lames d'appui, on peut suivant les cas (forage vertical, forage incliné de direction constante ou changement de direction de forage) modifier les forces radiales s'exerçant sur le train de tiges et par conséquent sur l'outil en cours de forage, dans le sens voulu.

Cependant, les moyens de commande permettant l'actionnement des stabilisateurs connus actuellement ont une structure complexe, sont d'une utilisation difficile et ne permettent pas d'assurer des déplacements précis et parfaitement contrôlés des lames d'appui.

De manière générale, on ne connaissait pas jusqu'ici de dispositif simple et de fonctionnement parfaitement sûr permettant d'actionner à distance un équipement associé à un conduit dans lequel circule un fluide sous pression et de contrôler la mise en œuvre de cet équipement, tout en restant compatible avec les dispositifs de télémesure associés et placés à proximité de l'équipement.

Le but de l'invention est de proposer un dispositif d'actionnement à distance d'un équipement associé à un conduit ayant une première extrémité par laquelle on envoie un fluide incompressible grâce à des moyens de pompage, avec un débit de service déterminé et une seconde extrémité éloignée de la première où le fluide incompressible est utilisé, par exemple, comme fluide moteur, dispositif d'actionnement qui soit d'une structure simple et d'un fonctionnement sûr, qui puisse être mis en œuvre sans utiliser de source d'énergie autre que celle fournie par le fluide incompressible et d'éléments d'actionnement extérieurs au conduit et dont le fonctionnement puisse être contrôlé.

Dans ce but, le dispositif d'actionnement suivant l'invention comporte, à l'intérieur du conduit, dans une zone éloignée de la première extrémité :

— un premier élément profilé d'étranglement limitant la section de passage du fluide et créant une perte de charge variable en fonction du débit du fluide,

— un piston différentiel monté mobile dans la direction axiale à l'intérieur du conduit, soumis d'un côté à la pression du fluide en amont du premier élément d'étranglement et de l'autre côté à la pression du fluide réduite par le premier élément d'étranglement profilé,

— une surface profilée prévue sur le piston et un second élément profilé d'étranglement solidaire du conduit, destinés à coopérer entre eux pour limiter le passage de fluide et augmenter la perte de charge de façon très importante de part et d'autre du piston, lors du déplacement de celui-ci dans un premier sens de déplacement,

— un moyen de rappel du piston dans son second sens de déplacement opposé au premier,

— un moyen de détermination des phases d'actionnement par mesure de pression au niveau de la première extrémité du conduit, et

— un organe récepteur sur l'équipement actionné par le piston ou la différence de pression de part et d'autre du piston,
la force du moyen de rappel et le premier élément d'étranglement étant prévus pour que le piston commence à se déplacer dans le premier sens de déplacement pour un débit d'actionnement supérieur au débit de service du fluide dans le conduit.

Dans le cas où le conduit est un train de tiges creuses d'un dispositif de forage à trajectoire contrôlée portant un outil de forage fixé à l'une de ses extrémités, l'équipement actionné par le piston étant un dispositif de stabilisation comportant un corps relié au train de tiges et au moins une lame d'appui montée mobile radialement dans le corps, le piston du dispositif d'actionnement est monté mobile dans l'alésage central du corps, non seulement en translation mais aussi en rotation autour de l'axe du train de tiges et il comporte, sur sa surface latérale externe, des rampes longitudinales, inclinées dans une direction radiale par rapport à l'axe des tiges, placées les unes à la suite des autres suivant la périphérie du piston et reliées entre elles pour constituer une surface d'actionnement continue par des parties complémentaires de guidage pour le déplacement en rotation pas à pas du piston et pour son retour à sa position initiale, au moins un doigt d'actionnement monté mobile radialement dans le corps coopérant avec la surface d'actionnement continue d'une part et la lame d'autre part pour son extraction radiale, lors du déplacement du piston, dans un premier sens de déplacement qui s'accompagne d'une perte de charge très fortement accrue, dans le fluide de forage en circulation, en fin de mouvement d'actionnement du piston.

Afin de bien faire comprendre l'invention, on va maintenant décrire, à titre d'exemples non limitatifs, en se référant aux figures jointes en annexe, plusieurs modes de réalisation d'un dispositif d'actionnement suivant l'invention utilisé dans le domaine du forage et de l'exploitation pétrolière.

Dans ces figures:

la fig. 1 est une vue schématique d'une installation de forage comportant un équipement qui peut être actionné par un dispositif selon l'invention,

les fig. 1a, 1b, 1c et 1d sont des vues en coupe longitudinale d'un dispositif d'actionnement suivant l'invention et suivant quatre modes de réalisation différents,

la fig. 2 est un diagramme de fonctionnement du dispositif représenté à la fig. 1a, montrant les variations au cours du temps, pendant un cycle de fonctionnement du dispositif, de divers paramètres caractéristiques,

la fig. 3 est une vue schématique d'ensemble d'un dispositif de forage à trajectoire contrôlée comportant des stabilisateurs commandés par un dispositif d'actionnement suivant l'invention,

la fig. 4 est une vue en coupe longitudinale, suivant IV-IV de la fig. 5, d'un stabilisateur du dispositif de forage représenté sur la fig. 3,

la fig. 5 est une vue en coupe, suivant V-V de la fig. 4, du stabilisateur,

la fig. 6 est une vue développée de la surface d'actionnement, des lames et du piston du stabilisateur.

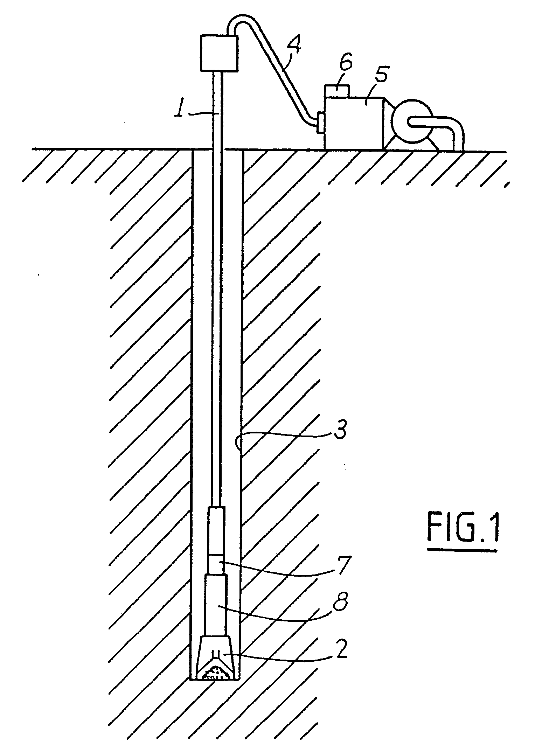

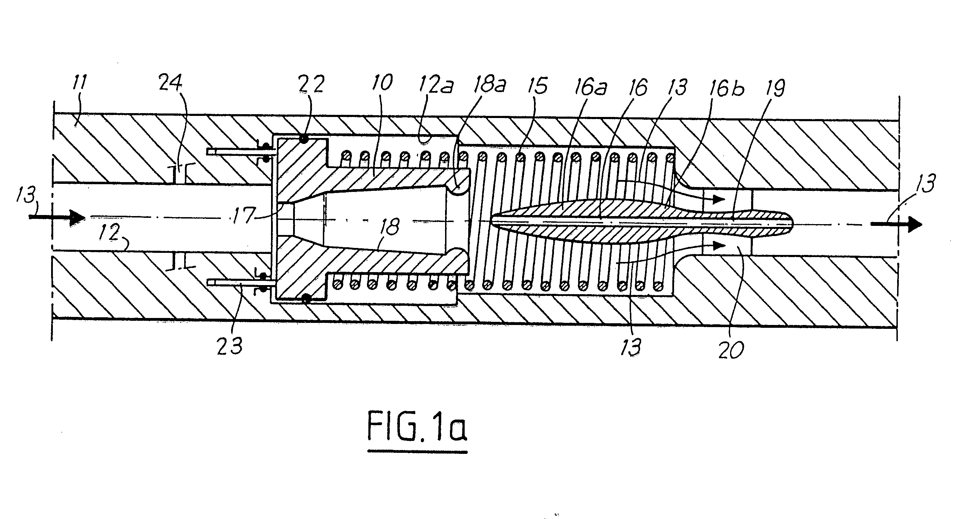

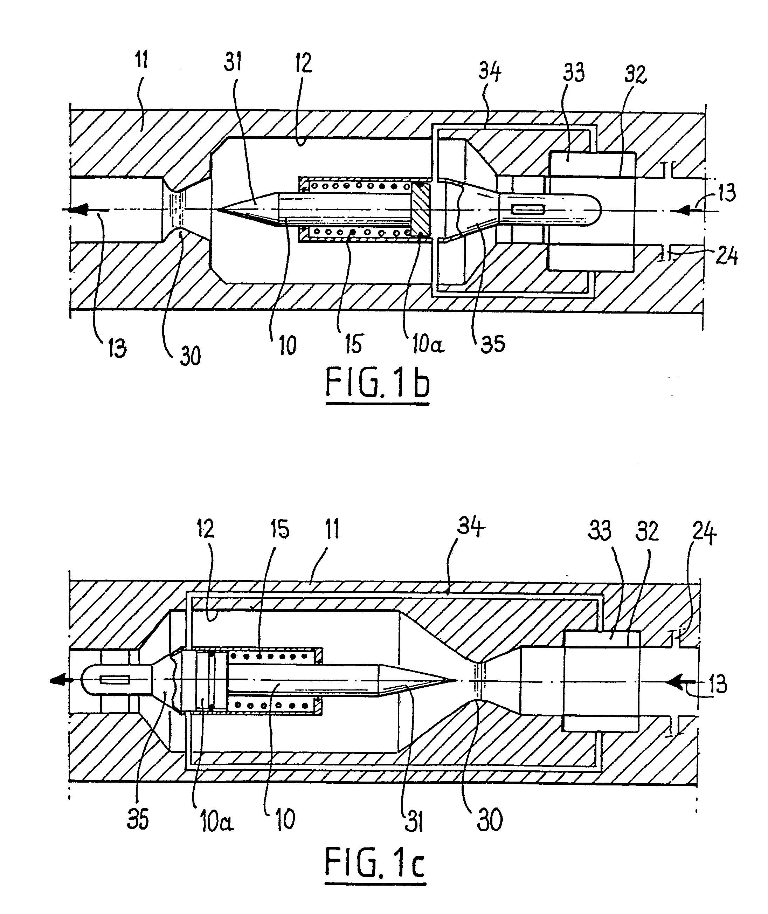

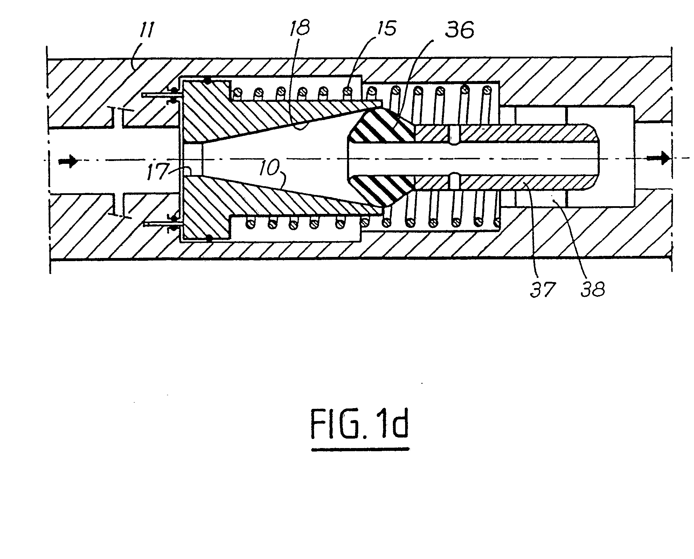

Sur la fig.1, on voit une installation de forage qui comporte un train de tiges 1 portant à son extrémité inférieure l'outil de forage 2. L'outil 2 a été représenté en position de travail au fond du trou 3. Le train de tiges creuses 1 constitue un conduit de grande longueur dont une extrémité est reliée à l'outil 2 en fond de trou et dont l'autre extrémité qui se trouve en surface est reliée à un conduit 4 permettant l'injection de boue de forage à haute pression et à débit constant dans l'espace intérieur des tiges 1. Pour cela, le conduit 4 est relié à une installation de pompage 5 sur laquelle un dispositif de mesure 6 permet de déterminer de façon précise la pression de pompage. La boue de forage descend dans le train de tiges, alimente l'outil 2 en fond de trou et remonte à la surface par le trou 3, à l'extérieur du train de tiges 1. Un équipement 7 d'orientation de l'outil 2 et un ensemble de télémesure 8 sont associés au train de tiges 1, au-dessus de la partie de jonction de l'outil 2 au train de tiges. La boue de forage sous pression est utilisée comme fluide moteur de l'outil de forage 2.

Sur la fig. 1a, on voit un mode de réalisation d'un dispositif d'actionnement suivant l'invention permettant de mettre en œuvre un équipement tel que l'équipement 7 d'orientation d'un outil de forage, à distance, en lui fournissant la puissance motrice nécessaire. Ce dispositif est placé dans une partie 11 du conduit de grande longueur constitué par le train de tiges. Cette partie 11 peut elle-même être constituée par une pièce de raccord entre les tiges, une partie d'extrémité d'une tige ou encore une partie de l'équipement 7 raccordable au train de tiges. Cette partie 11 creuse reçoit dans son alésage central 12 le flux de boue de forage qui circule suivant la direction des flèches 13 pour parvenir à l'outil 2 en fond de trou. L'alésage 12 de la partie 11 du train de tiges comporte une partie élargie 12a à l'intérieur de laquelle est monté le dispositif d'actionnement. Ce dispositif comporte un piston différentiel 10 de forme tubulaire et profilée, un ressort de rappel 15 et un élément profilé 16 disposé axialement dans le conduit 11.

L'alésage intérieur du piston 10 comporte deux parties successives dans le sens 13 de circulation de la boue de forage, une première partie profilée 17 constituant un diaphragme introduisant une perte de charge dans le conduit et une seconde partie profilée 18 de forme tronconique comportant une partie d'étranglement 18a à son extrémité et reliée au diaphragme 17 par l'intermédiaire d'une surface torique. Cette surface profilée 18 peut être également de forme cylindrique. L'élément profilé 16 ou aiguille comporte une partie antérieure 16a en forme d'ogive et une partie postérieure 16b permettant sa fixation à l'intérieur du conduit 11 par l'intermédiaire d'entretoises 20. L'aiguille est percée d'un alésage central 19. Dans d'autres variantes de réalisation du dispositif, cette aiguille 16 peut être réalisée sans perçage central.

Le piston 10 est monté étanche par l'intermédiaire d'un jeu de joints segments 22 dans la partie 12a de l'alésage du conduit constituant la chambre du piston 10. A sa partie antérieure, le piston 10 est prolongé par une partie de guidage 23 montée glissante et de façon parfaitement guidée à l'intérieur d'ouvertures usinées dans la partie 11 du conduit. D'autres liaisons mécaniques peuvent être réalisées entre la partie 11 du conduit et le piston 10. Le piston 10 est rappelé dans sa position avant, comme représenté sur la fig. 1a, par un ressort 15 dont la force est prévue pour maintenir le piston dans cette position avant lorsque la boue de forage circule dans le conduit à son débit normal ou débit de service inférieur au débit de commande du dispositif d'actionnement.

La forme de la partie antérieure profilée 16a de l'élément 16 est prévue pour coopérer avec le profil 18 du piston pour créer une perte de charge importante sur la circulation de la boue de forage, lorsque le piston se déplace vers l'arrière, c'est-à-dire de la gauche vers la droite sur la fig. 1a. Cette perte de charge due à la coopération des éléments profilés 16 et 18 augmente, de façon importante et très rapidement, la perte de charge totale du dispositif.

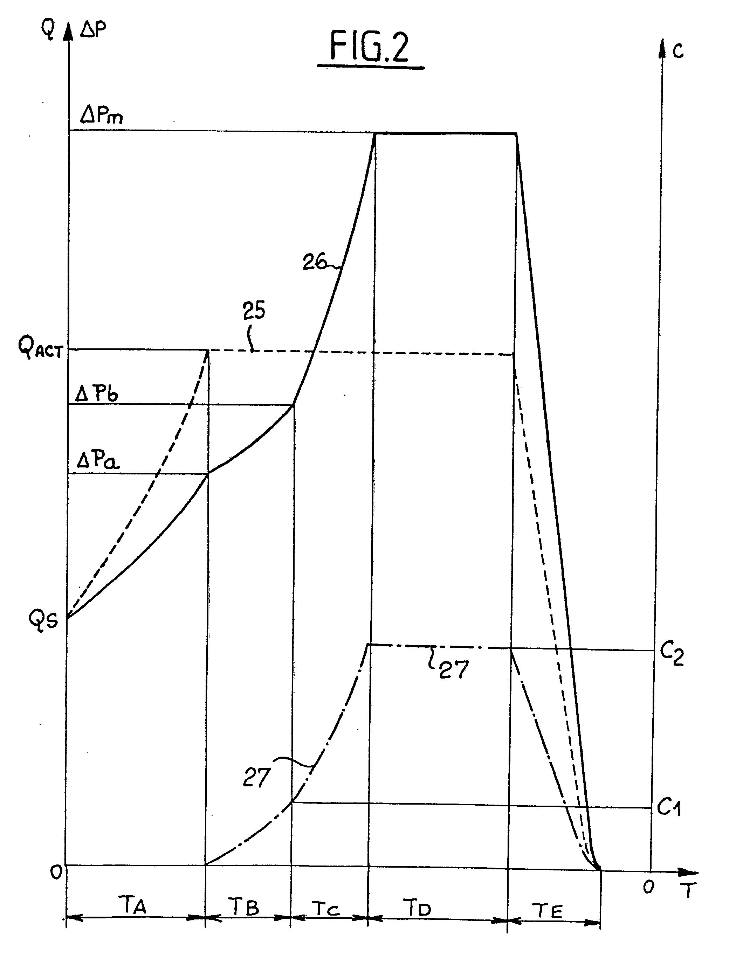

Sur la fig. 2, on voit un diagramme de fonctionnement du dispositif représenté sur la fig. 1a, le temps étant porté en abscisse, le débit Q de la boue de forage, la perte de charge $\Delta P$ à travers le dispositif d'actionnement et la course du piston différentiel 10, en ordonnée. La variation au cours du temps du débit Q, lors d'un cycle de fonctionnement du dispositif d'actionnement, a été représentée par la courbe 25 en pointillés, la variation de la perte de charge $\Delta P$ par la courbe 26 en traits pleins et la variation de la course C du piston 10 par la courbe en traits mixtes 27.

L'origine du diagramme représente le point de fonctionnement au débit de service QS de la boue de forage et à déplacement nul du piston 10.

Pour mettre en œuvre le dispositif d'actionnement, on augmente progressivement le débit de la boue de forage pendant la première période $T_A$ du cycle d'actionnement, pour amener ce débit de la valeur O ou QS à une valeur $Q_{ACT}$ ou débit d'actionnement. A la fin de cette partie du cycle, la perte de charge dans la partie antérieure profilée 17 du piston 10 atteint une valeur $\Delta Pa$ telle que la surpression sur la face antérieure du piston crée une force qui commence à dépasser la force de rappel du ressort. Le piston se déplace alors vers l'arrière, pour effectuer une course C1, le débit étant maintenu à la valeur $Q_{ACT}$. La perte de charge augmente lentement de la valeur $\Delta Pa$ à la valeur $\Delta Pb$, par diminution lente de la section de sortie du piston 10 pendant la seconde phase B du cycle de fonctionnement. La course C1 du piston 10 a alors amené son profil 18 en vis-à-vis du profil 16a de l'aiguille 16. La perte de charge $\Delta P$ augmente très rapidement et le piston se déplace vers l'arrière à vitesse accrue pendant la phase C du cycle de fonctionnement. Le débit est maintenu à la valeur $Q_{ACT}$ grâce à l'installation de pompage 5, le déplacement du piston est auto-entretenu par l'augmentation de la perte de charge et le piston 10 se déplace jusqu'à venir en butée sur la partie arrière de sa chambre 12a en effectuant la course C2. La perte de charge passe alors de la valeur $\Delta Pb$ à sa valeur maximale $\Delta Pm$. Cette augmentation de la perte de charge est considérablement plus forte que celle qui pourrait être obtenue par une augmentation du débit dans un diaphragme dont l'ouverture est constante.

La partie antérieure 23 du piston est reliée à un organe mobile de l'équipement 7 pour donner un angle d'orientation à l'outil 2.

Simultanément ou indépendamment, on peut également utiliser la surpression $\Delta P$ de la boue de forage prélevée par des conduits 24 à l'avant du piston 10, pour actionner un organe récepteur hydraulique de l'équipement 7. Si, au cours de la manœuvre de l'équipement 7, au débit constant $Q_{ACT}$, la force exercée par le piston 10 devient insuffisante pour continuer à effectuer la manœuvre, la perte de charge n'augmente plus. On enregistre un palier à une valeur $\Delta Pi < \Delta Pm$. Il suffit alors de porter le débit à une valeur $Q'_{ACT}$ supérieure à $Q_{ACT}$ pour terminer la manœuvre de l'équipement 7. La perte de charge maximale s'établit à une valeur $\Delta' Pm > \Delta Pm$. On peut ensuite ramener et maintenir le débit à la valeur $Q_{ACT}$ qui est suffisante pour assurer le maintien du piston 10 en position arrière.

Tant que le débit est maintenu à la valeur $Q_{ACT}$, le piston différentiel 10 reste dans sa position arrière et la perte de charge $\Delta P$ à sa valeur maximale.

On obtient le retour du piston à sa position avant représentée sur la fig. 1a, en diminuant progressivement le débit pour le ramener à la valeur O (phase E). On peut faire fonctionner ensuite l'outil 2 en augmentant le débit à la valeur du débit de service $Q_S$ et avec la nouvelle position de l'équipement associé au dispositif d'actionnement.

Pendant tout le cycle de fonctionnement, l'augmentation puis le maintien du débit à $Q_{ACT}$ sont obtenus par l'installation de pompage 5 et les variations de pression de pompage $\Delta P$ sont repérées et enregistrées grâce à l'appareil de mesure 6. Aussi bien la commande que le contrôle du cycle de fonctionnement sont donc effectués sans difficultés depuis la surface sans utiliser de dispositif de télécommande. En particulier, on peut enregistrer facilement et repérer un arrêt du piston avant la fin de la manœuvre qui se traduit par un palier de pression. On obtient alors la poursuite de la manœuvre en augmentant le débit jusqu'à une valeur suffisante pour assurer le déblocage de l'équipement. Les moyens de pompage 5 doivent donc permettre de monter le débit à des valeurs supérieures à $Q_{ACT}$, en cas de besoin. De façon générale, pendant tout le cycle de fonctionnement du dispositif, l'enregistrement de la surpression correspondant à la perte de charge $\Delta P$, en fonction du temps, permet de connaître la position du piston 10 et donc de contrôler l'actionnement du dispositif. On associe donc au dispositif de mesure 6 un enregistreur de la pression en fonction du temps.

Pour obtenir un retour du piston dans sa position initiale, après actionnement de l'équipement, il peut être seulement nécessaire de diminuer le débit de pompage jusqu'à une valeur non nulle, inférieure à $Q_S$. On peut ensuite faire fonctionner l'outil 2 en augmentant à nouveau ce débit jusqu'à la valeur $Q_S$.

Sur les fig. 1b, 1c et 1d, on a représenté des variantes de réalisation du dispositif d'actionnement. Les éléments correspondants sur les fig. 1a à 1d portent les mêmes repères.

Sur la fig. 1b, on voit que le piston 10 est cette fois constitué par une pièce pleine comportant une partie profilée 31 destinée à coopérer avec un élément profilé 30 usiné sur la surface intérieure du conduit 11. Cet élément 30 joue à la fois le rôle du diaphragme 17 et de l'aiguille 16 du mode de réalisation représenté sur la fig. 1a. Le piston 10 comporte une partie cylindrique 10a munie d'un joint segment monté mobile à l'intérieur d'une chambre prévue dans un cylindre 35 monté suivant l'axe du conduit 11. La chambre du piston 10 reçoit à l'une de ses extrémités un fluide hydraulique par l'intermédiaire de canalisations 34 communiquant à leur autre extrémité avec une chambre annulaire 33 coaxiale au conduit et fermée par une membrane cylindrique souple 32. Le fluide hydraulique agissant dans la chambre du piston et en contact avec sa face avant est en équilibre de pression avec la boue de forage en amont du dispositif d'actionnement. La face arrière du piston est en revanche en contact avec la boue de forage à une pression diminuée de la perte de charge introduite par l'élément profilé 30.

L'ensemble piston 10 et ressort 15 est monté étanche à l'intérieur de la chambre du cylindre 35 recevant un fluide hydraulique non pollué par la boue de forage.

Le fonctionnement du dispositif est pratiquement identique au fonctionnement du dispositif représenté sur la fig. 1a, la perte de charge $\Delta$ P introduite par l'élément 30 devenant suffisante dès que le débit atteint la valeur $Q_{ACT}$, pour que le piston se déplace dans le sens d'écoulement (flèche 13). La coopération de la partie 31 du piston et de l'élément 30 augmente alors la perte de charge de façon que le piston se déplace jusqu'à sa position extrême.

Comme précédemment, la boue de forage en surpression est récupérée par des conduits 24 pour l'actionnement de l'équipement 7 associé au conduit.

Sur la fig. 1c, on voit un mode de réalisation du dispositif associant des éléments identiques à ceux du dispositif de la fig. 1b, mais dans une disposition différente. Le cylindre 35 et la chambre du piston 10 sont orientés en sens inverse, par rapport à la circulation de la boue de forage (flèche 13). Un circuit fermé comportant la chambre annulaire 33, les conduits 34 et la chambre du piston 10 renferme un fluide hydraulique totalement isolé de la boue de forage et l'élément profilé 30 du conduit introduit une perte de charge qui permet l'amorçage du mouvement du piston lorsque le débit atteint la valeur $Q_{ACT}$. La partie profilée 31 du piston coopère alors avec l'élément 30 qui joue le rôle à la fois du diaphragme 17 et de l'aiguille 16 du mode de réalisation de la fig. 1a.

Comme précédemment, la surpression $\Delta$ P est récupérée par des conduits 24 pour l'actionnement de l'équipement 7.

Dans le mode de réalisation représenté à la fig. 1d, le piston 10 a une forme tubulaire et un double profil 17, 18 comme le piston représenté sur la fig. 1a.

Le profil tronconique 18 coopère avec un organe 36 de fermeture progressive d'un conduit 37 fixé de façon coaxiale à l'intérieur du conduit 11 grâce à des entretoises 38 permettant la fixation du conduit 37 et de l'élément d'obturation 36.

Dès que le débit atteint la valeur $Q_{ACT}$, le piston se déplace vers l'arrière et le profil 18 referme l'élément déformable 36 en augmentant la perte de charge, si bien que le piston 10 se déplace jusqu'à sa position extrême en butée arrière.

Dans les dispositifs représentés aux fig. 1b, 1c et 1d, la remise en position initiale du piston peut être effectuée en ramenant le débit à une valeur faible qui peut être la valeur nulle.

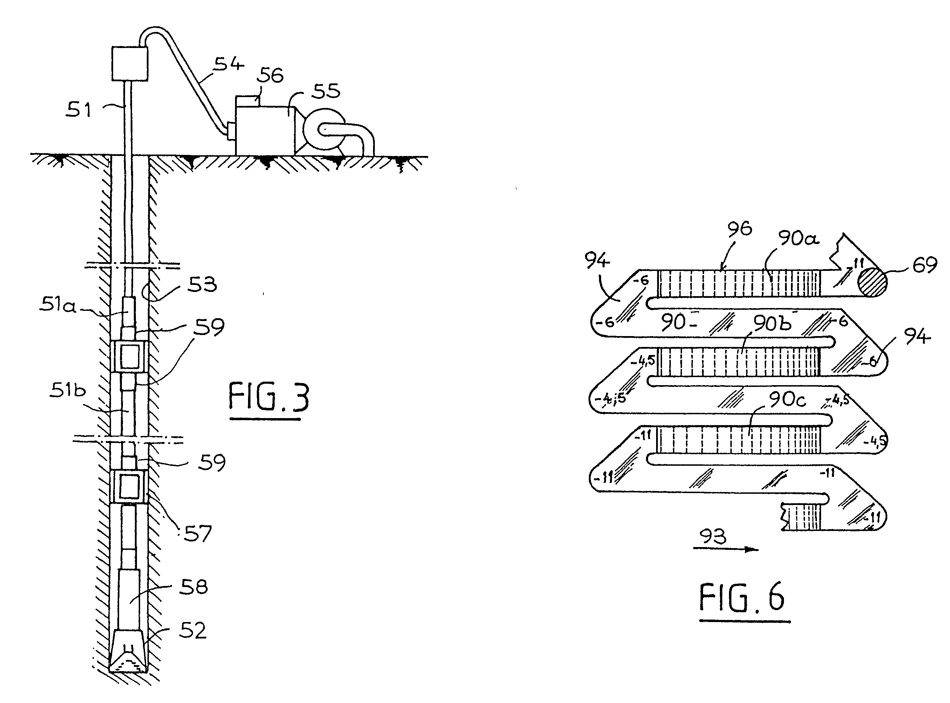

Sur la fig. 3, on voit une installation de forage comportant un train de tiges de forage 51 portant à son extrémité inférieure un outil de forage 52 et relié à son autre extrémité, par un conduit 54, à une installation de pompage 55 permettant l'injection de boue de forage par l'intérieur du train de tiges 51, au niveau de l'outil 52 en position de travail dans le fond du trou 53.

Le train de tiges 51 comporte des tiges successives telles que 51a et 51b qui sont, comme visible sur la fig. 1, reliées entre elles et à l'outil de forage 52 par des éléments intermédiaires comportant un stabilisateur 57 et des pièces de jonction 59.

Sur le dispositif de pompage 55 est placé un moyen de mesure 56 de la pression de pompage de la boue de forage.

Un ensemble de mesure 58 est associé à l'outil et permet en particulier des mesures d'orientation du train de tiges 51.

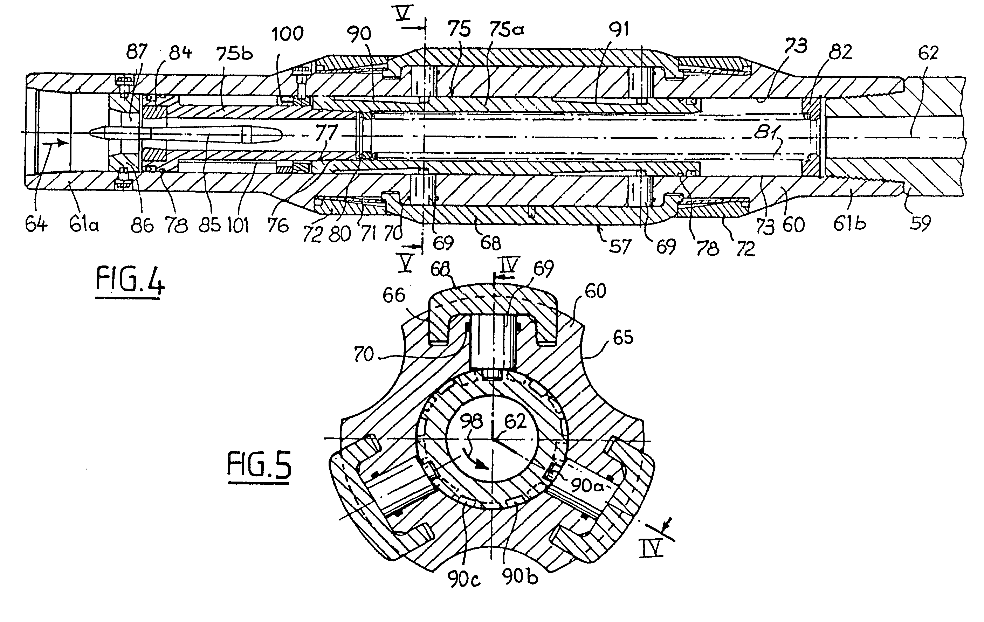

Sur la fig. 4 on voit un dispositif de stabilisation désigné de façon générale par le repère 57 qui comporte un corps 60 de forme générale tubulaire comportant des extrémités 61a et 61b taraudées permettant la jonction du stabilisateur 57 au train de tiges ou à l'outil par l'intermédiaire de raccords filetés tels que 59. Lorsque le stabilisateur est relié au train de tiges, l'alésage 63 du corps 60 a son axe 62 commun avec l'axe du train de tiges. La boue de forage circule dans le train de tiges et le stabilisateur suivant la direction axiale, dans le sens de la flèche 64.

Comme il est visible sur les fig. 4 et 5, le corps 60 comporte, sur sa surface périphérique, des échancrures 65 pour permettre le passage de la boue de forage à l'extérieur du stabilisateur, à son retour vers la surface, à l'intérieur du trou 53. Le corps 60 comporte également des lumières 66 servant de logement pour les lames d'appui 68. Le stabilisateur représenté sur les fig. 4 et 5 comporte trois lames d'appui 68 disposées dans des ouvertures 66 placées à 120° autour du corps du stabilisateur. Des ressorts à lame 71 dont une extrémité est fixée par des vis sur le corps 70 sont en appui par leur autre extrémité sur les parties terminales des lames 68 de façon à les maintenir en position rétractée dans la direction radiale comme représenté sur les fig. 4 et 5. Des pièces de fermeture 72 montées dans les parties d'extrémité des ouvertures 66, à l'extérieur des ressorts à lame 71, permettent d'assurer le guidage des lames 68 dans leur direction radiale de déplacement. Un jeu est réservé au montage entre la lame de ressort 71 et la pièce de fermeture 72 afin de permettre un certain débattement de la lame d'appui dans la direction radiale, entre sa position de rétraction complète représentée aux fig. 4 et 5 et une position d'extraction ou position de sortie de la lame d'appui 68, sous l'effet d'une paire de doigts d'actionnement 69 montés mobiles dans la direction radiale à l'intérieur du corps 60. Chacun des doigts 69 est monté mobile et étanche dans le corps 60 grâce à un joint-segment d'étanchéité 70.

A l'intérieur de l'alésage 63 du corps 60 est monté un piston tubulaire 75 comportant, pour permettre son montage, deux parties 75a et 75b assemblées entre elles de façon étanche grâce à un filetage 76 et à un joint 77. Le piston 75 est monté glissant dans l'alésage 63 par l'intermédiaire d'une partie de sa surface périphérique et de deux joints-segments d'étanchéité 78 placés à ses extrémités.

A l'extrémité de la partie 75b du piston, à l'intérieur de la partie 75a de ce piston, est disposée une butée à bille 80 sur laquelle vient en appui l'extrémité d'un ressort hélicoïdal 81 dont l'autre extrémité est en appui sur une butée 82 fixée sur le corps 60, à l'intérieur de l'alésage 63. Une pièce annulaire profilée 84 est également montée à l'intérieur de la partie 75b du piston 75, à son extrémité correspondant à l'entrée du fluide de forage circulant suivant le sens de la flèche 64.

Une seconde pièce profilée 85 ou aiguille est disposée à l'intérieur du corps 60 suivant l'axe 62 de l'alésage 63 de ce corps 60. L'aiguille 85 est fixée dans le corps 60 grâce à une pièce annulaire de support 86 comportant des entretoises radiales 87 pour la fixation de l'aiguille 85.

Le fluide de forage circulant suivant le sens et la direction de la flèche 64 subit une perte de charge qui est fonction de son débit, lorsqu'il pénètre à l'intérieur du piston 75 par l'entrée profilée 84. Pour un certain débit, appelé débit d'actionnement, la différence de pression de part et d'autre du piston 75 devient suffisante pour exercer sur ce piston une force supérieure à la force du ressort 81, si bien que le piston 75 commence à se déplacer axialement dans le sens de la flèche 64. Le profil intérieur de la pièce 84 coopère avec le profil extérieur de l'aiguille 85 pour diminuer progressivement la section de passage du fluide et augmenter corrélativement la perte de charge. En fin de mouvement du piston, la perte de charge devient très forte et correspond à une valeur qui peut être facilement repérée au niveau de l'installation de pompage, grâce au dispositif de mesure de pression 56 associé à cette installation de pompage 55. Le déplacement du piston 75 est donc commandé par le débit du fluide de pompage et parfaitement contrôlé depuis la surface par une mesure de pression.

Un tel dispositif d'actionnement à distance présente une grande stabilité puisque la perte de charge engendrant la force de déplacement du piston augmente continuellement pendant le déplacement de ce piston.

Sur la surface latérale externe du piston 75 sont usinées des rampes d'actionnement constituant deux jeux 90 et 91 espacés longitudinalement sur le piston 75 et coopérant chacun avec un ensemble de trois doigts d'actionnement 69 placés à l'une des extrémités des lames 68.

Les rampes 90 et 91 sont inclinées dans le même sens, dans la direction radiale, par rapport à l'axe 62 commun au piston 75 et à l'alésage 63. Cette inclinaison permet de déplacer les lames radialement pendant le déplacement axial du piston suivant le sens de la flèche 64.

En se reportant aux fig. 5 et 6, on voit que des rampes inclinées successives 90a, 90b, 90c sont disposées les unes à la suite des autres sur le piston 75, suivant sa périphérie. Un cycle complet de déplacement d'une lame 68 est obtenu par les trois rampes inclinées successives 90a, 90b et 90c dont les profondeurs d'usinage à leurs extrémités et à partir du diamètre extérieur du piston 75 sont indiquées (en $10^{-3}$ m) sur la fig. 6. Chacun des doigts 69 est maintenu, par les ressorts 71 de la lame 68 correspondante, en contact avec le fond d'une rampe 90, par l'intermédiaire d'une partie d'extrémité usinée sous la forme d'une portée sphérique.

Comme il est visible sur la fig. 6, le déplacement du piston dans le sens de la flèche 93 permet de faire passer l'extrémité du doigt 69 du niveau −11 au niveau −6, par interaction de ce doigt 69 avec la rampe 90a. De la même façon, la rampe 90b permet de faire passer le doigt du niveau −6 au niveau −4,5. Ces deux déplacements le long des rampes 90a et 90b s'accompagnent donc d'un mouvement radial des doigts 69 vers l'extérieur du corps 70 et donc d'un mouvement des lames 68 vers l'extérieur. En effet, comme il est visible sur la fig. 5, la répartition des rampes suivant la périphérie du piston 75 est telle qu'à chaque instant, l'ensemble des doigts 69 vient en contact avec un ensemble de rampes identiques et que les déplacements, dans la direction radiale, de ces doigts sont donc identiques à tout instant. La rampe 90c correspond à un passage des doigts 69 du niveau −4,5 au niveau −11, ce qui correspond à un retour des doigts 69 à leur position initiale et à un retour des lames 68 dans leur position rétractée.

Chacun des trois doigts 69 de l'ensemble représenté à la fig. 5 effectue donc un cycle complet de déplacement avec trois rampes 90a, 90b et 90c. Le nombre total des rampes constituant l'ensemble 90 est donc 3×3=9.

On voit sur les fig. 5 et 6 que les rampes 90a, 90b et 90c sont reliées entre elles par des parties courbes 94 et par des parties droites 95 à niveau constant, pour constituer une surface continue d'actionnement 96 disposée à la périphérie du piston 75. Les parties courbes 95 joignant l'extrémité des rampes 90 à l'extrémité des parties droites 95 permettent la mise en rotation du piston 75, pas à pas dans la direction de la flèche 98, par interaction de l'extrémité du doigt 69 avec la partie courbe 94, en fin de mouvement du piston 75 dans un sens ou dans l'autre. Chacun des pas correspond à la distance angulaire entre la rampe 90 et la partie plane 95 voisine, c'est-à-dire 360°/18 = 20°.

Dans un sens la force motrice est procurée par la perte de charge du fluide de forage et dans l'autre par l'énergie emmagasinée par le ressort 81.

Le mouvement de rotation pas à pas du piston ne peut se produire que dans le sens de la flèche 98, une roue libre 100 (fig. 4) étant montée dans l'alésage 63 du corps 60 autour de la partie 75b du piston 75. Le piston est rendu solidaire en rotation de cette roue libre par l'intermédiaire d'une clavette engagée dans une rainure longitudinale 101 usinée sur la partie 75b du piston. Le piston 75 peut ainsi se déplacer longitudinalement par rapport à la roue libre 100 pour effectuer ses mouvements de va-et-vient sous l'action du fluide et sous l'action du ressort 81.

Chacun des déplacements longitudinaux du piston dans le sens de la flèche 64, par action du fluide de forage en circulation, se traduit donc par un mouvement radial des lames dans le sens de l'extraction (deux pas successifs) et dans le sens de la rétraction (un pas de déplacement longitudinal). En enregistrant depuis la surface les pas de déplacement longitudinal du piston, on arrive donc à connaître de façon précise la position des lames, ce qui permet de réaliser un très bon contrôle du stabilisateur. Cet enregistrement des pas, comme il a été indiqué, est extrêmement facile puisque la fin de chacun des déplacements moteurs du piston dans le sens longitudinal se traduit par une forte augmentation de pression de pompage.

Le mode de fonctionnement du dispositif est le suivant:

Les lames étant dans leur position rétractée telle que représentée aux fig. 4 et 5, on envoie un débit au moins égal au débit d'actionnement du dispositif dans le train de tiges, ce qui produit le déplacement du piston et l'augmentation automatique et progressive de la perte de charge jusqu'à ce que le piston arrive à sa position extrême, la perte de charge étant alors maximum. L'enregistrement de la pression depuis la surface permet de déterminer la fin d'un pas de déplacement du piston. Si l'amplitude de sortie des lames est suffisante, le dispositif est maintenu automatiquement en position tant que le débit d'alimentation en fluide de forage n'est pas annulé. Si l'on désire effectuer un pas supplémentaire pour réaliser une sortie supplémentaire des lames, on annule le débit d'alimentation en fluide de forage et le piston revient dans sa position initiale par l'action du ressort 81. Entretemps, une rotation de 20° du piston a permis au doigt 69 d'être placé sur une partie plane 95 de la surface d'actionnement 96. A l'extrémité de la partie plane 95, la partie courbe 94 de la surface d'actionnement 96 permet une nouvelle rotation de 20° du piston dans le sens voulu grâce à la roue libre 100, pour que le doigt 69 se trouve dans l'alignement de la rampe suivante 90b. Par augmentation du débit du fluide de forage jusqu'à la valeur du débit d'actionnement, on produit un déplacement du piston 75 dans le sens de la flèche 93, les doigts 69 et les lames 68 étant déplacés d'un pas supplémentaire vers l'extérieur et dans la direction radiale. Il est bien évident que le système peut être remis à l'état initial par passages successifs des doigts 69 sur la partie plane 95 au niveau −4,5 et sur la rampe 90c.

Tous ces déplacements peuvent être parfaitement suivis depuis la surface par enregistrement de la pression.

Les principaux avantages du dispositif d'actionnement suivant l'invention sont apparents dans la description qui vient d'être faite; ce dispositif d'actionnement ne nécessite pas de moyen de télécommande, sa mise en œuvre et son contrôle étant réalisés en utilisant les moyens de pompage et de mesure normalement associés au conduit de grande longueur; ce dispositif d'actionnement est particulièrement simple et d'une grande sûreté de fonctionnement; sa manœuvre est réalisée par des opérations très simples et facilement contrôlables;

il ne nécessite l'utilisation d'aucun élément en plus de ceux qui se trouvent dans le conduit au moment de sa mise en place.

Dans le cas où le dispositif d'actionnement est utilisé pour commander un dispositif de stabilisation, les déplacements successifs des lames d'appui dans un sens et dans l'autre sont parfaitement contrôlés et se produisent dans de très bonnes conditions de stabilité. Le dispositif est d'autre part d'un encombrement relativement réduit malgré ses nombreuses possibilités.

L'invention ne se limite pas aux modes de réalisations qui ont été décrits; elle en comporte au contraire toutes les variantes.

C'est ainsi que le piston et les éléments profilés qui lui sont associés peuvent avoir une forme différente de celles qui ont été décrites. Le premier élément profilé peut être associé au piston ou, au contraire, indépendant de ce piston. Ce premier élément profilé peut être distinct ou confondu avec le second élément profilé. La forme de ces éléments profilés peut être différente des formes qui ont été décrites. Ces formes sont prévues pour que le diagramme Pression/Temps et la perte de charge maximale Pm correspondent aux conditions opératoires de l'équipement auquel est associé le dispositif d'actionnement.

Le moyen de rappel du piston peut être différent d'un ressort mécanique.

L'organe récepteur de la force motrice du piston ou de la différence de pression prévu sur l'équipement peut avoir toute forme permettant de transmettre cette force motrice aux éléments actifs de l'équipement.

Le cycle de fonctionnement de l'outillage peut être différent de celui qui a été décrit, en particulier la phase précédant le déplacement rapide du piston correspondant à une forte augmentation de la perte de charge peut s'accompagner d'une perte de charge extrêmement faible, ce qui permet de bien séparer la phase inactive de la phase active de l'équipement.

Dans le cas d'un dispositif d'actionnement d'un stabilisateur, le nombre de rampes successives différentes constituant un jeu de rampes peut être différent de trois si l'on désire effectuer un déplacement avec une succession de pas inférieure ou supérieure à trois. On peut utiliser moins de trois lames et éventuellement une seule lame d'appui sur le stabilisateur, associée ou non à d'autres lames fixes, ou, au contraire, utiliser un nombre de lames plus grand que trois. On peut utiliser des lames disposées suivant la direction de l'axe du train de tiges ou des lames inclinées par rapport à cet axe.

Dans tous les cas, le nombre de rampes disposées à la périphérie du piston d'actionnement sera égal au nombre de lames multiplié par le nombre de pas différents de déplacement des lames dans la direction radiale.

On peut effectuer le montage des lames d'une façon différente de celle qui a été décrite et utiliser des lames d'une forme différente.

Un moyen différent d'une roue libre peut être associé au piston pour empêcher sa mise en rotation dans un sens et pour l'autoriser dans l'autre sens.

Le dispositif de forage suivant l'invention peut comporter un nombre quelconque de stabilisateurs comportant chacun un nombre quelconque de lames, dont une lame au moins est mobile radialement.

De façon générale, l'équipement actionné peut être constitué non seulement par des dispositifs d'orientation d'un outil de forage ou des dispositifs de stabilisation d'un train de tiges, mais encore par des dispositifs de perforation d'un cuvelage, ou de gonflement de membranes d'étanchéité dans un puits ou un forage en utilisant la surpression due à la perte de charge. Le dispositif d'actionnement suivant l'invention peut s'appliquer à tout équipement utilisé dans le domaine du forage ou de l'exploitation pétrolière ou encore dans d'autres domaines où l'on utilise des conduits de grande longueur peu ou pas accessibles, pour la distribution d'un fluide incompressible. L'invention s'applique en particulier dans le cas de la distribution d'eau ou dans le cas de l'irrigation, l'équipement associé au conduit étant alors une vanne à plusieurs voies permettant de faire passer l'eau distribuée d'un conduit à un autre. Cette manœuvre s'effectue très simplement en augmentant le débit de l'eau à un niveau supérieur au débit de service puis en diminuant ce débit jusqu'à un niveau très faible ou nul pour le remonter ensuite au niveau correspondant au débit de service. La manœuvre inverse peut évidemment être réalisée ensuite en augmentant à nouveau le débit au-delà du débit de service jusqu'à la valeur d'actionnement.

L'invention s'applique de façon très générale dans tous les cas où l'on utilise un fluide comme fluide moteur dans des conduites de grande longueur et au moins partiellement inaccessibles et également dans tous les cas de la distribution de fluide par des conduits de grande longueur ayant des parties inaccessibles.

## Revendications

1. Dispositif d'actionnement à distance d'un équipement associé à un conduit (1, 11) dans lequel circule un fluide incompressible, ayant une première extrémité par laquelle on envoie un fluide incompressible grâce à des moyens de pompage (5), avec un débit de service déterminé, et une seconde extrémité éloignée de la première où le fluide incompressible est utilisé, par exemple comme fluide moteur, caractérisé par le fait qu'il comporte, à l'intérieur du conduit (1, 11), dans une zone éloignée de la première extrémité:
— un premier élément profilé d'étranglement (17, 30) limitant la section de passage du fluide et créant une perte de charge variable en fonction du débit de fluide,
— un piston différentiel (10) monté mobile dans la direction axiale à l'intérieur du conduit soumis d'un côté à la pression du fluide en amont du premier élément d'étranglement (17, 30) et de l'autre côté à la pression du fluide réduite par le premier élément d'étranglement profilé (17, 30),
— une surface profilée (18, 31) prévue sur le piston et un second élément profilé (16, 30) solidaire du conduit (1, 11), destinés à coopérer entre eux pour limiter le passage du fluide et augmenter la perte de charge de part et d'autre du piston (10) de façon très importante lors du déplacement de celui-ci dans un premier sens de déplacement,
— un moyen de rappel (15, 55) du piston dans son second sens de déplacement opposé au premier,
— un moyen (6, 56) de détermination des phases d'actionnement par mesure de pression au niveau de la première extrémité du conduit (1, 11), et
— un organe récepteur (24, 51) sur l'équipement actionné par le piston ou la différence de pression de part et d'autre du piston (10),
la force du moyen de rappel (15, 55) et le premier élément profilé (17, 30, 60) étant prévus pour que le piston (10) commence à se déplacer dans le premier sens de déplacement pour un débit d'actionnement $Q_{ACT}$ supérieur au débit de service du fluide dans le conduit (1, 11).

2. Dispositif d'actionnement suivant la revendication 1, caractérisé par le fait que le piston (10) a une forme tubulaire, son alésage central comportant successivement dans le sens de circulation du fluide incompressible, un diaphragme élément d'étranglement (17) constituant le premier élément profilé et une surface (18) destinée à coopérer avec le second élément profilé (16) solidaire du conduit (11).

3. Dispositif d'actionnement suivant la revendication 1, caractérisé par le fait que le conduit (11) comporte un élément d'étranglement profilé (30) sur sa surface intérieure et que le piston (10) monté dans un cylindre (35) à la partie centrale du conduit comporte une surface profilée (31) destinée à coopérer avec la surface profilée (30) qui constitue à la fois le premier et le second élément profilé.

4. Dispositif d'actionnement suivant la revendication 3, caractérisé par le fait que la pression du fluide incompressible en amont du piston est transmise au premier côté de ce piston opposé à la surface profilée (31) par l'intermédiaire d'une membrane (32) et d'au moins un conduit (34) limitant avec la chambre du cylindre (35) dans lequel est monté le piston (10) un espace rempli de fluide hydraulique totalement isolé du fluide incompressible circulant dans le conduit (11).

5. Dispositif d'actionnement suivant la revendication 4, caractérisé par le fait que l'élément profilé (30) est disposé en amont de l'ensemble constitué par le cylindre (35) et le piston (10).

6. Dispositif d'actionnement suivant la revendication 1, caractérisé par le fait que le piston (10) a une forme tubulaire et que son alésage comporte successivement dans le sens d'écoulement du fluide incompressible un premier élément profilé (17) constituant un diaphragme pour le fluide incompressible en écoulement et une surface évasée (18) coopérant avec un second élément profilé (36) déformable pour modifier la section de passage du fluide incompressible dans le conduit (11) lors du déplacement du piston (10), cet élément déformable (36) étant porté par le conduit (11) dans sa partie centrale.

7. Dispositif d'actionnement suivant l'une quelconque des revendications 1 à 6, caractérisé par le fait que le moyen (6) de détermination des phases d'actionnement par mesure de pression comporte un enregistreur de la pression du fluide incompressible en fonction du temps permettant de connaître la position du piston différentiel, à chaque instant.

8. Dispositif d'actionnement suivant la revendication 1, caractérisé par le fait que le conduit est un train de tiges creuses (51) d'un dispositif de forage à trajectoire contrôlée portant un outil de forage (52) fixé à l'une de ses extrémités, l'équipement actionné étant un dispositif de stabilisation (57) comportant un corps (60) relié au train de tiges (51) ayant un alésage central (63) coaxial à l'alésage des tiges (51) et au moins une lame d'appui (68) montée mobile radialement dans le corps (60), le piston différentiel du dispositif d'actionnement (75) étant monté mobile dans l'alésage central (63) du corps (60), non seulement en translation mais aussi en rotation autour de l'axe (62) du train de tiges (51), et qu'il comporte, sur sa surface latérale externe, des rampes longitudinales (90) inclinées dans une direction radiale par rapport à l'axe (62) du train de tiges, placées les unes à la suite des autres suivant la périphérie du piston (75) et reliées entre elles pour constituer une surface d'actionnement (96) continue, par des parties complémentaires (94, 95) pour le déplacement en rotation pas à pas du piston (75) et son retour à sa position initiale, au moins un doigt d'actionnement (69) monté mobile radialement dans le corps (60) coopérant avec la surface d'actionnement (96) d'une part et la lame (68) d'autre part, pour son extraction radiale, lors du déplacement du piston (75) dans son premier sens de déplacement qui s'accompagne d'une perte de charge très fortement accrue dans le fluide de forage en circulation, en fin de mouvement d'actionnement du piston (75).

9. Dispositif d'actionnement suivant la revendication 8, caractérisé par le fait qu'un moyen (100) est associé au piston (75) pour empêcher sa mise en rotation dans un sens et pour autoriser cette mise en rotation dans l'autre sens.

10. Dispositif d'actionnement suivant la revendication 9, caractérisé par le fait que le moyen (100) est une roue libre montée dans l'alésage (63) du corps (60) du dispositif de stabilisation, autour du piston (75), de façon que le piston (75) soit solidaire en rotation et libre en translation par rapport à cette roue libre (100) qui autorise le déplacement pas à pas en rotation du piston (75) dans un sens uniquement.

11. Dispositif d'actionnement suivant l'une quelconque des revendications 8, 9 et 10, caractérisé par le fait que les moyens élastiques de rappel des lames (68) en position rétractée sont constitués par des ressorts à lame (71) fixés sur le corps (60) et en appui sur l'extrémité des lames (68).

12. Dispositif d'actionnement suivant la revendication 11, caractérisé par le fait que des pièces de fermeture (72) sont disposées au-dessus des ressorts à lames (71) vers l'extérieur du corps du stabilisateur et assurent le guidage et le maintien des lames (68) à l'intérieur de lumières (66) percées dans le corps (60) du dispositif de stabilisation.

13. Dispositif d'actionnement suivant l'une quelconque des revendications 8 à 12, caractérisé par le fait que le dispositif de stabilisation comporte trois lames (68) successives suivant la périphérie du corps (60) à chacune desquelles sont associés deux doigts d'actionnement (69), les doigts d'actionnement (69) étant disposés suivant deux jeux dont les doigts sont maintenus en contact chacun avec une surface d'actionnement (66) comportant des rampes (90 ou 91), les deux jeux de doigts (69) et les deux surfaces d'actionnement (96) étant disposés en des positions espacées longitudinalement par rapport au piston (75).

14. Dispositif suivant l'une quelconque des revendications 8 à 13, caractérisé par le fait que les moyens complémentaires pour créer une perte de charge portés par le piston (75) et le corps (60) du dispositif de stabilisation (57) sont constitués respectivement par une surface annulaire profilée (84) et par une aiguille (85) ayant pour axe de révolution l'axe (62) du train de tiges, ces moyens complémentaires (84, 85) constituant le moyen de commande du déplacement du piston (75) par augmentation du débit du fluide de forage jusqu'à une valeur de seuil appelée débit d'actionnement.

15. Dispositif suivant l'une quelconque des revendications 8 à 14, caractérisé par le fait qu'il comporte un dispositif de pompage (55) du fluide de forage et un dispositif de mesure (56) de la pression de ce fluide de forage.

16. Dispositif suivant l'une quelconque des revendications 1 à 15, caractérisé par le fait qu'il comporte au moins deux dispositifs de stabilisation (57) reliés au train de tiges (51) en des endroits espacés axialement le long de ce train de tiges.

17. Dispositif d'actionnement suivant l'une quelconque des revendications 1 à 5, caractérisé par le fait que l'équipement (7) est un dispositif d'orientation d'un outil de forage (2) fixé à l'extrémité d'un train de tiges (1) de grande longueur.

## Patentansprüche

1. Fernbetätigungsvorrichtung für eine Ausrüstung in Verbindung mit einer Leitung (1, 11), in der ein inkompressibles Fluid zirkuliert und die ein erstes Ende, über das ein inkompressibles Fluid mit Hilfe von Pumpmitteln (5) mit einer bestimmten Betriebs-Durchflussleistung zugeführt wird und ein von dem ersten Ende entferntes zweites Ende aufweist, wo das inkompressible Fluid beispielsweise als Antriebsfluid genutzt wird, dadurch gekennzeichnet, dass die Vorrichtung im Inneren der Leitung (1, 11) in einer von dem ersten Ende entfernten Zone

— ein erstes Drossel-Formelement (17, 30), das den Durchflussquerschnitt des Fluids begrenzt und einen in Abhängigkeit von der Durchflussleistung veränderlichen Druckabfall erzeugt,

— einen axialbeweglich in der Leitung montierten Differentialkolben (10), der einerseits mit dem Fluiddruck stromauf des ersten Drosselelements (17, 30) und andererseits mit dem durch das erste Drosselelement (17, 30) reduzierten Fluiddruck beaufschlagt wird,

— eine Formfläche (18, 31) an dem Kolben und ein fest mit der Leitung (1, 11) verbundenes zweites Formelement (16, 30), die miteinander zusammenwirken, um den Durchflussquerschnitt des Fluids zu begrenzen und den Druckabfall über den Kolben (10) erheblich zu erhöhen, wenn sich der Kolben in einer ersten Verschieberichtung bewegt,

— Mittel (15, 55) zum Zurückstellen des Kolbens in entgegengesetzter Richtung,

— Mittel (6, 56) zur Bestimmung der Betätigungsphasen durch Messung des Druckes in Höhe des ersten Endes der Leitung (1, 11), und

— ein durch den Kolben oder durch die Druckdifferenz zwischen beiden Seiten des Kolbens (10) betätigtes Abgriffsorgan (24, 51) an der Ausrüstung aufweist,

wobei die Kraft der Rückstellmittel (15, 55) und das erste Formelement (17, 30, 60) so ausgelegt sind, dass der Kolben (10) sich bei einer Durchflussleistung $Q_{ACT}$ des Fluids in der Leitung (1, 11), die grösser ist als die Betriebs-Durchflussleistung, in der ersten Richtung zu verschieben beginnt.

2. Betätigungsvorrichtung nach Anspruch 1, dadurch gekennzeichnet, dass der Kolben (10) eine rohrförmige Gestalt besitzt und dass seine Mittelbohrung in Strömungsrichtung des inkompressiblen Fluids aufeinanderfolgend eine blendenförmige Drosselstelle (17), die das erste Formelement bildet, und eine Oberfläche (18) aufweist, die mit dem mit der Leitung (11) verbundenen zweiten Formelement (16) zusammenwirkt.

3. Betätigungsvorrichtung nach Anspruch 1, dadurch gekennzeichnet, dass die Leitung (11) an ihrer Innenfläche ein Drossel-Formelement (30) aufweist und dass der Kolben (10) in einem Zylinder (35) im Mittelbereich der Leitung montiert ist und eine Formfläche (31) aufweist, die mit der das erste und zugleich das zweite Formelement bildenden Formfläche (30) zusammenwirkt.

4. Vorrichtung nach Anspruch 3, dadurch gekennzeichnet, dass der Druck des inkompressiblen Fluids stromauf des Kolbens zu der ersten Seite des Kolbens, die der Formfläche (31) entgegengesetzt ist, übertragen wird über eine Membran (32) und wenigstens eine Leitung (34), die mit der den Kolben (10) aufnehmenden Kammer des Zylinders (35) einen Hohlraum bildet, der mit einem vollständig von dem in der Leitung (11) zirkulierenden inkompressiblen Fluid isolierten Hydraulikfluid gefüllt ist.

5. Betätigungsvorrichtung nach Anspruch 4, dadurch gekennzeichnet, dass das Formelement (30) stromaufwärts der durch den Zylinder (35) und den Kolben (10) gebildeten Einheit angeordnet ist.

6. Betätigungsvorrichtung nach Anspruch 1, dadurch gekennzeichnet, dass der Kolben (10) eine rohrförmige Gestalt besitzt und dass seine Bohrung in Strömungsrichtung des inkompressiblen Fluids aufeinanderfolgend ein erstes Formelement (17), das eine Engstelle für das strömende inkompressible Fluid bildet, und eine erweiterte Fläche (18) aufweist, die bei Verschiebung des Kolbens (10) mit einem verformbaren zweiten Formelement (36) zusammenwirkt, um den Durchflussquerschnitt des inkompressiblen Fluids in der Leitung (11) zu verändern, wobei das verformbare Element (36) im Mittelbereich der Leitung (11) gehalten ist.

7. Betätigungsvorrichtung nach einem der Ansprüche 1 bis 6, dadurch gekennzeichnet, dass die Mittel (6) zur Bestimmung der Betätigungsphasen durch Druckmessung ein Aufzeichnungsgerät zur Aufzeichnung des Druckes des inkompressiblen Fluids als Funktion der Zeit und damit zur Bestimmung der Position des Differentialkolbens zu jedem Zeitpunkt aufweist.

8. Betätigungsvorrichtung nach Anspruch 1, dadurch gekennzeichnet, dass die Leitung ein hohler Bohrstrang (51) einer richtungssteuerbaren Bohranordnung ist, der an seinem einen Ende ein Bohrwerkzeug (52) trägt, und dass die betätigte Ausrüstung eine Stabilisierungseinrichtung (57) mit einem mit dem Bohrstrang (51) verbundenen Gehäuse (60) ist, das eine koaxial zur Bohrung des Bohrstranges (51) verlaufende Mittelbohrung (63) und wenigstens einen radialbeweglich an dem Gehäuse (60) montierten Stützflügel (68) aufweist, wobei der Differentialkolben der Betätigungsvorrichtung (75) verschiebbar und um die Achse (62) des Bohrstranges (51) drehbar in der Mittelbohrung (63) des Gehäuses (60) montiert ist und auf seiner äusseren Mantelfläche längsverlaufende, in Radialrichtung schräg in bezug auf die Achse (62) des Bohrstranges angestellte Rampen (90) aufweist, die aufeinanderfolgend auf dem Umfang des Kolbens (75) angeordnet und durch komplementäre Abschnitte (94, 95) für die schrittweise Drehung des Kolbens (75) und für die Rückführung des Kolbens in seine Ausgangsstellung miteinander verbunden sind, so dass sie eine kontinuierliche Steuerfläche (96) bilden, und wobei wenigstens ein radialbeweglich in dem Gehäuse (60) montierter Spreizfinger (69) vorgesehen ist, der zur Spreizung des Stützflügels (68) einerseits mit der Steuerfläche (96) und andererseits mit dem Stützflügel (68) zusammenwirkt, wenn sich der Kolben (75) in seiner ersten Verschieberichtung verschiebt, wobei diese Verschiebebewegung des Kolbens von einer sehr starken Zunahme des Druckabfalls der zirkulierenden Bohrflüssigkeit am Ende der Betätigungsbewegung des Kolbens (75) begleitet ist.

9. Betätigungsvorrichtung nach Anspruch 8, dadurch gekennzeichnet, dass dem Kolben (75) Mittel (100) zugeordnet sind, die eine Drehung des Kolbens ausschliesslich in einer Richtung gestatten.

10. Betätigungsvorrichtung nach Anspruch 9, dadurch gekennzeichnet, dass die Mittel (100) durch einen in der Bohrung (63) des Gehäuses (60) der Stabilisiereinrichtung angeordneten, den Kolben (75) umgebenden Freilauf gebildet werden, der mit dem Kolben (75) drehfest verbunden aber axial in bezug auf diesen beweglich ist und die schrittweise Drehbewegung des Kolbens (75) in einem einheitlichen Drehsinn zulässt.

11. Betätigungsvorrichtung nach einem der Ansprüche 8, 9 und 10, dadurch gekennzeichnet, dass die elastischen Mittel zum Zurückstellen des Flügels (68) in seine zurückgezogene Position durch Blattfedern (71) gebildet werden, die an dem Gehäuse (60) befestigt sind und am Ende des Flügels (68) anliegen.

12. Vorrichtung nach Anspruch 11, dadurch gekennzeichnet, dass Abschlussstücke (72) aussen in bezug auf das Gehäuse des Stabilisators über den Blattfedern (71) angeordnet sind und die Führung und Halterung der Flügel (68) in Durchbrüchen (66) des Gehäuses (60) der Stabilisiereinrichtung gewährleisten.

13. Betätigungsvorrichtung nach einem der Ansprüche 8 bis 12, dadurch gekennzeichnet, dass die Stabilisiereinrichtung (3) in einer Folge in Umfangsrichtung des Gehäuses (60) angeordnete Flügel (68) aufweist, von denen jeder mit zwei Spreizfingern (69) versehen ist, wobei die Spreizfinger (69) in zwei Gruppen angeordnet sind, deren Spreizfinger jeweils mit einer Rampen (90 oder 91) bildenden Steuerfläche (96) in Berührung stehen und die beiden Gruppen von Spreizfingern (69) sowie die beiden Gruppen von Steuerflächen (96) in Längsrichtung des Kolbens (75) in Abstand zueinander angeordnet sind.

14. Vorrichtung nach einem der Ansprüche 8 bis 13, dadurch gekennzeichnet, dass die an dem Kolben (75) und dem Gehäuse (60) der Stabilisiereinrichtung (57) angeordneten komplementären Mittel zur Erzeugung eines Druckabfalls durch eine ringförmige Formfläche (84) bzw. eine Nadel (85) mit der Achse (62) des Bohrstranges als Rotationsachse gebildet werden und die Mittel zur Erzeugung der Verschiebung des Kolbens (75) durch Erhöhung der Durchflussleistung der Bohrflüssigkeit bis auf einen als Betätigungs-Durchflussleistung bezeichneten Schwellenwert darstellen.

15. Vorrichtung nach einem der Ansprüche 8 bis 14, dadurch gekennzeichnet, dass sie Pumpmittel (55) für die Bohrflüssigkeit und Mittel (56) zur Messung des Druckes dieser Bohrflüssigkeit aufweist.

16. Vorrichtung nach einem der Ansprüche 1 bis 15, dadurch gekennzeichnet, dass sie wenigstens zwei Stabilisiereinrichtungen (57) aufweist, die an in Axialrichtung des Bohrstranges (51) in Abstand zueinander liegenden Stellen mit dem Bohrstrang verbunden sind.

17. Vorrichtung nach einem der Ansprüche 1 bis 5, dadurch gekennzeichnet, dass die Ausrüstung (7) eine Vorrichtung zur Ausrichtung eines am Ende eines langen Bohrstranges (1) angeordneten Bohrwerkzeugs (2) ist.

## Claims

1. Device for the remote actuation of an appliance associated with a duct (1, 11) in which an incompressible fluid circulates, having a first end via which an incompressible fluid is conveyed by pumping means (5) at a specific operating rate, and a second end which is distant from the first and where the incompressible fluid is used, for example, as a working fluid, characterized in that it comprises within the duct (1, 11) in a zone distant from the first end:
— a first profiled throttling element (17, 30) limiting the passage cross-section of the fluid and generating a loss of head variable as a function of the fluid flowrate,
— a differential piston (10) mounted so as to be movable in the axial direction within the duct and subjected, on one side, to the pressure of the fluid upstream of the first throttling element (17, 30) and, on the other side, to the fluid pressure reduced by the first profiled throttling element (17, 30),
— a profiled surface (18, 31) provided on the piston and a second profiled element (16, 30) integral with the duct (1, 11), which are intended to interact with one another to limit the passage of the fluid and increase the loss of head on either side of the piston (10) very substantially during the movement of the latter in a first direction of movement,
— a means (15, 55) of returning the piston in its second direction of movement opposite the first,
— a means (6, 56) of determining the actuation phases by means of pressure measurement at the first end of the duct (1, 11), and
— a receiving means (24, 51) on the appliance, actuated by the piston or as a result of the pressure difference on either side of the piston (10), the force of the returning means (15, 55) and the first profiled element (17, 30, 60) being such that the piston (10) starts to move in the first direction of movement at an actuation rate $Q_{ACT}$ higher than the operating rate of the fluid in the duct (1, 11).

2. Actuation device according to Claim 1, characterized in that the piston (10) has a tubular shape, its central bore having successively, in the direction of circulation of the incompressible fluid, a diaphragm throttling element (17) forming the first profiled element and a surface (18) intended for interacting with the second profiled element (16) integral with the duct (11).

3. Actuation device according to Claim 1, characterized in that the duct (11) has a profiled throttling element (30) on its inner surface, and in that the piston (10) mounted in a cylinder (35) in the central part of the duct has a profiled surface (31) intended for interacting with the profiled surface (30) which forms both the first and the second profiled elements.

4. Actuation device according to Claim 3, characterized in that the pressure of the incompressible fluid upstream of the piston is transmitted to the first side of this piston opposite the profiled surface (31) by means of a diaphragm (32) and at least one duct (34) limiting, together with the chamber of the cylinder (35) in which the piston (10) is mounted, a space filled with hydraulic fluid and completely isolated from the incompressible fluid circulating in the duct (11).

5. Actuation device according to Claim 4, characterized in that the profiled element (30) is arranged upstream of the assembly consisting of the cylinder (35) and the piston (10).

6. Actuation device according to Claim 1, characterized in that the piston (10) has a tubular shape, and in that its bore has successively, in the direction of flow of the incompressible fluid, a first profiled element (17) forming a diaphragm for the flowing incompressible fluid and a widened surface (18) interacting with a second deformable profiled element (36) to change the passage cross-section of the incompressible fluid in the duct (11) during the movement of the piston (10), this deformable element (36) being carried by the duct (11) in its central part.

7. Actuation device according to any one of Claims 1 to 6, characterized in that the means (6) of determining the actuation phases by means of pressure measurement comprises a recorder recording the pressure of the incompressible fluid as a function of time, making it possible to ascertain the position of the differential piston at each moment.

8. Actuation device according to Claim 1, characterized in that the duct is a set of hollow rods (51) of a controlled-path drilling device carrying a drilling tool (52) fastened to one of its ends, the actuated appliance being a stabilization device (57) comprising a body (60) connected to the set of rods (51) and having a central bore (63) coaxial relative to the bore of the rods (51) and at least one bearing blade (68) mounted so as to be radially movable in the body (60), the differential piston of the actuation device (75) being mounted in the central bore (63) of the body (60) so as to be movable not only in translation, but also in rotation about the axis (62) of the set of rods (51); and in that the differential piston incorporates, on its outer lateral surface, longitudinal slopes (90) inclined in a radial direction relative to the axis (62) of the set of rods, arranged one after the other over the periphery of the piston (75) and connected to one another by means of matching parts (94, 95) to form a continuous actuating surface (96) for the step-by-step rotary movement of the piston (75) and for its return into the initial position, at least one actuating finger (69) mounted so as to be radially movable in the body (60) interacting with the actuating surface (96) on the one hand and the blade (68) on the other hand to extract the latter radially during the movement of the piston (75) in its first direction of movement, which is accompanied by a greatly increased loss of head in the circulating drilling fluid, at the end of the actuating movement of the piston (75).

9. Actuation device according to Claim 6, characterized in that a means (100) is associated with the piston (75) to prevent it from rotating in one direction and to allow it to rotate in the other direction.

10. Actuation device according to Claim 9, characterized in that the means (100) is a freewheel mounted in the bore (63) of the body (60) of the stabilization device round the piston (75), so that the piston (75) is integral in terms of rotation and free in terms of translation in relation to this free-wheel (100) which allows the step-by-step rotary movement of the piston (75) in one direction only.

11. Actuation device according to any one of Claims 8, 9 and 10, characterized in that the elastic means of returning the blades (68) into their retracted position consist of leaf springs (71) fastened to the body (60) and bearing on the end of the blades (68).

12. Actuation device according to Claim 11, characterized in that closing pieces (72) are arranged above the leaf springs (71) towards the outside of the body of the stabilizer and ensure that the blades (68) are guided and maintained within slots (66) made in the body (60) of the stabilization device.

13. Actuation device according to any one of Claims 8 to 12, characterized in that the stabilization device has three successive blades (68) over the periphery of the body (60), with each of which two actuating fingers (69) are associated, the actuating fingers (69) being arranged in two sets whose fingers are each maintained in contact with an actuating surface (66) including slopes (90 or 91), the two sets of fingers (69) and the two actuating surfaces (96) being arranged in positions spaced longitudinally from one another in relation to the piston (75).

14. Device according to any one of Claims 8 to 13, characterized in that the matching means of generating a loss of head, which are carried by the piston (75) and the body (60) of the stabilization device (57), consist respectively of a profiled annular surface (84) and a needle (85), the axis of revolution of which is the axis (62) of the set of rods, these matching means (84, 85) forming the means of controlling the movement of the piston (75) as a result of an increase in the flowrate of the drilling fluid to a threshold value called the actuation rate.

15. Device according to any one of Claims 8 to 14, characterized in that it includes a pumping device (55) for the drilling fluid and a device (56) for measuring the pressure of this drilling fluid.

16. Device according to any one of Claims 1 to 15, characterized in that it includes at least two stabilization devices (57) connected to the set of rods (51) at locations spaced axially from one another along this set of rods.

17. Actuation device according to any one of Claims 1 to 5, characterized in that the appliance (7) is a device for orienting a drilling tool (2) fastened to the end of a set of rods (1) of great length.

FIG.1

FIG.1a

0 190 529

FIG.1b

FIG.1c

FIG. 1d

FIG.2

FIG.3

FIG.6

FIG.4

FIG.5